# EUROPÄISCHE PATENTSCHRIFT

(11) **EP 3 732 953 B1**
(45) Veröffentlichungstag und Bekanntmachung des Hinweises auf die Patenterteilung: **22.12.2021**
(21) Anmeldenummer: 20000117.0
(22) Anmeldetag: 19.03.2020
(51) Int. Cl.: A01D 90/04, A01F 15/10

(54) **SCHNEIDVORRICHTUNG**
CUTTING DEVICE
DISPOSITIF DE COUPE

(30) Priorität: 21.03.2019 DE 102019002028
(43) Veröffentlichungstag der Anmeldung: 04.11.2020
(73) Patentinhaber: Maschinenfabrik Bernard Krone GmbH & Co. KG, 48480 Spelle (DE)
(72) Erfinder: Trentmann, Justus, 49219 Glandorf (DE); van Bassen, Alois, 49832 Freren (DE)

(56) Entgegenhaltungen:
- EP-A2- 1 027 821
- DE-C1- 19 706 429
- DE-U1- 29 708 035
- DE-U1- 29 719 754
- DE-U1-202014 006 083
- DE-U1-202017 100 339

## Beschreibung

Die Erfindung betrifft eine Schneidvorrichtung zum Fördern und Schneiden insbesondere landwirtschaftlichen Schneidgutes. Die Schneidvorrichtung hat einen Förderkanal und zumindest ein schwenkbar gelagertes Schneidelement. Das Schneidelement ist durch eine Bewegung in eine erste Schwenkrichtung aus einer Ruhestellung in eine Schneidstellung überführbar. In der Schneidstellung ist das Schneidelement zum Schneiden des Schneidgutes zumindest teilweise innerhalb des Förderkanals positioniert. Die Schneidvorrichtung hat eine erste Stellvorrichtung, die ein Rückstellelement wie etwa eine Feder aufweist. Die erste Stellvorrichtung ist zum Aufbringen eines ersten Drehmomentes auf das Schneidelement in der Ruhestellung ausgebildet. Die erste Stellvorrichtung dient zum Rückführen des Schneidelementes in die Schneidstellung und zum Halten des Schneidelementes in der Schneidstellung.

Aus der DE 20 2014 006 083 U1 ist eine landwirtschaftliche Erntemaschine mit einer vorbeschriebenen Schneidvorrichtung bekannt. Durch die Möglichkeit der Überführung des Schneidelementes aus der Ruhestellung in die Schneidstellung lässt sich eine Schnittlänge des Schneidgutes einstellen. Das Schneidelement wird zur Überführung des Schneidelementes aus der Ruhestellung mit einem ersten Drehmoment beaufschlagt und hält das Schneidelement im Betrieb in der Schneidstellung. Das von einer ersten Stellvorrichtung aufgebrachte Drehmoment ist dabei so gering gewählt, dass das Schneidelement bei Hindurchtreten von Fremdkörpern wie Steinen durch den Förderkanal entgegen der ersten Schwenkrichtung ausweicht, also aus der Schneidstellung zumindest teilweise zurückschwenkt.

Nachteilig bei der bekannten Schneidvorrichtung ist, dass die Überführbarkeit des Schneidelementes zwischen Ruhe- und Schneidstellung durch Schneidgutreste, welche sich im Betrieb der Schneidvorrichtung und bei Positionierung des Schneidelementes in der Ruhestellung in dessen unmittelbarer Umgebung ablagern, nur eingeschränkt möglich ist. Insbesondere verhindert verdichtetes Schneidgut zwischen dem Förderkanal und dem Schneidelement ein Lösen des Schneidelementes aus der Ruhestellung durch das erste Drehmoment.

Aufgabe der vorliegenden Erfindung ist, eine gattungsgemäße Schneidvorrichtung mit höherer Zuverlässigkeit bereitzustellen.

Erfindungsgemäß wird die Aufgabe dadurch gelöst, dass die Schneidvorrichtung eine zweite Stellvorrichtung zum Verschwenken des Schneidelementes aus der Ruhestellung in die erste Schwenkrichtung aufweist. Die zweite Stellvorrichtung ist derart zum Aufbringen eines zweiten Drehmomentes auf das Schneidelement ausgebildet, dass das zweite Drehmoment größer ist als das von der ersten Stellvorrichtung aufgebrachte erste Drehmoment in der Ruhestellung.

Der Förderkanal der Schneidvorrichtung wird insbesondere von einer Förderkanalwandung begrenzt. Die Förderkanalwandung hat insbesondere schlitzförmige Ausnehmungen, durch die sich das Schneidelement zumindest in der Schneidstellung insbesondere hindurcherstreckt. Gegenüber der Förderkanalwandung ist der Förderkanal insbesondere begrenzt durch einen Förder- und Schneidrotor. Im Betrieb der Schneidvorrichtung und bei Positionierung des Schneidelementes in der Schneidstellung befindet sich das Schneidelement bei Betrachtung in Förderrichtung des Schneidgutes wiederkehrend zwischen zwei rotierenden und zum Schneidelement benachbarten Mitnehmern des Förder- und Schneidrotors.

In der Ruhestellung ist das Schneidelement nicht oder nur zu einem geringen Teil innerhalb des Förderkanals angeordnet. In der Schneidstellung des Schneidelementes ist demgegenüber ein größerer Anteil, insbesondere eine Schneide des Schneidelementes, im Förderkanal angeordnet. Bevorzugt wird das Schneidelement aus der Ruhestellung in die Schneidstellung aufwärts verschwenkt.

Durch das erste Drehmoment soll das Schneidelement bei einer beabsichtigten Zuschaltung des Schneidelementes, d.h. Überführung dessen in die Schneidstellung, aus der Ruhestellung gelöst werden. Zur Aufbringung des ersten Drehmomentes wird insbesondere ein federbelastetes Erststellelement der ersten Stellvorrichtung an eine Oberfläche des Schneidelementes angelegt und übt insbesondere eine Kraft darauf aus, die insbesondere abhängig ist von einer Federsteifigkeit des Rückstellelementes. Aus dieser Kraft resultiert, berechnet auf Basis des Radius des Punktes der Krafteinleitung von einer Schwenkachse des Schneidelementes und der Richtung der Krafteinleitung bzw. des radial wirkenden Anteils der Kraft, das erste Drehmoment.

Das von der ersten Stellvorrichtung aufgebrachte Drehmoment variiert insbesondere mit einer Verschwenkung des Schneidelementes. Bevorzugt nimmt das genannte Drehmoment mit der Überführung des Schneidelementes aus der Ruhestellung in die Schneidstellung ab, insbesondere weil der Radius des Punktes der Krafteinleitung dabei abnimmt. Besonders bevorzugt nimmt die Kraft aufgrund einer mit der Überführung abnehmenden Spannung des Rückstellelementes ab. Vorzugsweise ist das erste Drehmoment im Betrieb lediglich abhängig vom Schwenkwinkel des Schneidelementes. Das erste Drehmoment ist insbesondere das maximale von der ersten Stellvorrichtung auf das Schneidelement aufzubringende. Über die Lebensdauer der Schneidvorrichtung kann das erste Drehmoment dabei beispielsweise aufgrund eines Verschleißes des Rückstellelementes geringfügig geringer werden. Durch diesen Aufbau ist ein zuverlässiges Ausweichen des Schneidelementes vor Fremdkörpern wie Steinen im Förderkanal sichergestellt. Zur Rücküberführung des Schneidelementes aus der Schneidstellung in die Ruhestellung lässt sich insbesondere das Erststellelement vom Schneidelement lösen, woraufhin dieses bevorzugt schwerkraftbedingt die Ruhestellung erreicht.

Durch die zweite Stellvorrichtung lässt sich vorzugsweise alternativ zum ersten Drehmoment zumindest in der Ruhestellung ein zweites Drehmoment auf das Schneidelement aufbringen. Das zweite Drehmoment ist dabei deshalb größer als das erste Drehmoment, damit dadurch ein Verschwenken des Schneidelementes aus der Ruhestellung auch bei abgelagertem Schneidgut zwischen dem Förderkanal und dem Schneidelement erreicht wird, wenn das erste Drehmoment zum Auslösen einer Verschwenkung aus der Ruhestellung nicht mehr ausreicht. Dazu ist das zweite Drehmoment insbesondere größer als das maximale im Betrieb von der ersten Stellvorrichtung auf das Schneidelement aufzubringende Drehmoment. Die zweite Stellvorrichtung verfügt bevorzugt über eine Überlastsicherung, die ein Überschreiten eines bestimmten Drehmomentes im Falle einer ungewöhnlichen Blockade des Schneidelementes vermeidet und dadurch Beschädigungen der Schneidvorrichtung vermeidet.

Das Schneidelement wird durch die Aufbringung des zweiten Drehmomentes aus der Ruhestellung entgegen des Widerstands des abgelagerten Schneidgutes insbesondere um einen gewissen Winkel zwangsverschwenkt. Insbesondere Schneidgutablagerungen, die sich zwischen der Förderkanalwandung und dem Schneidelement angeordnet haben und insbesondere aufgrund einer mit dem Abstand vom Förderkanal zunehmenden Stärke des Schneidelementes eine Bewegung dessen in Richtung des Förderkanals blockieren, werden so verdrängt bzw. zurück in den Förderkanal geschoben. Nach einem folgenden Lösen des zweiten Drehmomentes vom Schneidelement ist dieses insbesondere wieder beweglich durch das erste Drehmoment in der Ruhestellung angeordnet. Die Zuverlässigkeit der Schneidvorrichtung ist dadurch hinsichtlich zukünftiger Überführungen des Schneidelementes durch die erste Stellvorrichtung signifikant erhöht.

Das in der Ruhestellung wirkende erste Drehmoment bezeichnet ebenso wie das in der Ruhestellung wirkende zweite Drehmoment ein von der ersten bzw. zweiten Stellvorrichtung (in dieser Stellung des Schneidelementes), je nach Widerstand, maximal aufzubringendes Drehmoment.

Die erste Stellvorrichtung ist insofern nicht durch die zweite Stellvorrichtung zu ersetzen, da bei Aufbringen des zweiten Drehmomentes während des Betriebes der Schneidvorrichtung im Falle von Fremdkörpern im Förderkanal das Schneidelement nur unzureichend ausweichen könnte. Vielmehr würde eine durch die zweite Stellvorrichtung bedingte, starre Positionierung des Schneidelementes in der Schneidstellung etwa zu einer Zerstörung dessen führen, sobald ein Fremdkörper wie ein Stein insbesondere durch den Förder- und Schneidrotor auf das Schneidelement zubewegt wird. Dagegen kann das Schneidelement entgegen dem geringeren, von der ersten Stellvorrichtung aufgebrachten Drehmoment zuverlässig ausweichen.

Im Betrieb befindet sich die Schneidvorrichtung dann, wenn Schneidgut durch den Förderkanal gefördert und ggf. durch das Schneidelement geschnitten wird.

Das Schneidelement lässt sich durch die zweite Stellvorrichtung insbesondere in eine Reinigungsstellung verschwenken, wobei die Reinigungsstellung der Schneidstellung entspricht oder zwischen Ruhe- und Schneidstellung erreicht wird. Eine signifikante Reinigungswirkung wird insbesondere bereits vor Erreichen einer der Schneidstellung entsprechenden Stellung realisiert.

Vorzugsweise umfasst die zweite Stellvorrichtung ein bewegliches, insbesondere schwenkbares Zweitstellelement. Das Zweitstellelement liegt zumindest beim Aufbringen des zweiten Drehmomentes am Schneidelement an. Insbesondere liegt das Zweitstellelement dabei an einer vom Förderkanal abgewandten Oberfläche des Schneidelementes an. In diesem Fall sind die erste und die zweite Stellvorrichtung insbesondere nicht miteinander gekoppelt. Alternativ dazu sind die erste und zweite Stellvorrichtung miteinander gekoppelt und übt beispielsweise ein Bauteil der zweiten Stellvorrichtung zur Aufbringung des zweiten Drehmomentes eine Kraft auf das Erststellelement auf.

Das Zweitstellelement liegt im Betrieb der Schneidvorrichtung und insbesondere bei Positionierung des Schneidelementes in der Schneidstellung bevorzugt nicht am Schneidelement an. Zur Vermeidung von Reibungsverlusten zwischen dem Erststellelement und/oder dem Zweitstellelement und dem Schneidelement weist das Erststellelement bzw. das Zweitstellelement vorzugsweise eine Rolle auf. Durch diesen Aufbau und insbesondere die Trennung von der ersten und der zweiten Stellvorrichtung können beide einzig auf ihren Anwendungsfall hin optimal ausgelegt werden.

Bevorzugt hat das Schneidelement einen ersten Oberflächenabschnitt zum Anliegen am Erststellelement der ersten Stellvorrichtung und einen abweichenden zweiten Oberflächenabschnitt zum Anliegen am Zweitstellelement der zweiten Stellvorrichtung. Somit wird das zweite Drehmoment durch eine Krafteinleitung auf den zweiten Oberflächenabschnitt erzeugt, wohingegen das erste Drehmoment durch eine Krafteinleitung auf den ersten Oberflächenabschnitt, der insbesondere weiter von der Schwenkachse des Schneidelementes beabstandet ist, eingeleitet wird. Insbesondere sind das Erststellelement und/oder das Zweitstellelement lösbar an das Schneidelement anzulegen und wirken alternativ zueinander. Durch diesen Aufbau werden Störungen der Schneidvorrichtung durch eine Kollision von erster und zweiter Stellvorrichtung zuverlässig vermieden.

Der erste Oberflächenabschnitt ist insbesondere im Wesentlichen in tangentialer Richtung um die Schwenkachse des Schneidelementes verlaufend und befindet sich in der Schneidstellung des Schneidelementes bevorzugt zumindest teilweise innerhalb des Förderkanals. Der zweite Oberflächenabschnitt hat bevorzugt relativ zur Schwenkachse des Schneidelementes zumindest einen abschnittsweise im Wesentlichen radialen Verlauf und ist insbesondere vom Förderkanal abgewandt. Durch diesen Aufbau lässt sich das höhere, zweite Drehmoment einfach auf das Schneidelement aufbringen, wohingegen zur Aufbringung des ersten Drehmomentes ein bewährter Aufbau der ersten Stellvorrichtung genutzt werden kann.

In einer vorteilhaften Ausgestaltung der Erfindung hat die zweite Stellvorrichtung zumindest einen mit dem Zweitstellelement gekoppelten Hydraulikzylinder zur Erzeugung des zweiten Drehmomentes. Insbesondere ist der Hydraulikzylinder ein einfach wirkender Hydraulikzylinder, wobei die zweite Stellvorrichtung zur entgegengesetzten Bewegung des Zweitstellelementes insbesondere eine Feder aufweist. Durch diesen Aufbau ist die Funktion der zweiten Stellvorrichtung mechanisch besonders einfach und damit wenig fehleranfällig umgesetzt.

Vorzugsweise ist das Zweitstellelement zur Aufbringung des zweiten Drehmomentes auf eine Mehrzahl von Schneidelementen ausgebildet. Insbesondere hat das Zweitstellelement eine Erstreckung in eine Querrichtung, die größer ist als der Abstand zweier benachbarter Schneidelemente. Die Querrichtung ist dabei insbesondere parallel zur Schwenkachse der Schneidelemente angeordnet. Insbesondere umfasst das Zweitstellelement ein/e sich in die Querrichtung erstreckende/s Rundrohr oder Rolle. Das Zweitstellelement ist dabei bevorzugt so ausgebildet, dass bei einer Aktivierung der zweiten Stellvorrichtung notwendigerweise eine Gruppe von Schneidelementen, insbesondere alle Schneidelemente, aus der Ruhestellung bewegt werden. Durch diesen Aufbau lässt sich die Funktion der zweiten Stellvorrichtung für mehrere Schneidelemente besonders einfach erreichen. Insbesondere ist jedem Schneidelement dabei eine gesonderte erste Stellvorrichtung zugeordnet, damit jedes Schneidelement im Betrieb einzeln aus der Schneidstellung ausweichen kann.

Bevorzugt sind das Erststellelement und das Zweitstellelement derart gekoppelt, dass bei einer Bewegung des Zweitstellelementes aus einer Lösestellung zum Schneidelement das Erststellelement, insbesondere durch ein Kuppelelement, vom Schneidelement und/oder von einer Schaltwelle gelöst wird. Insbesondere werden sämtliche Erststellelemente, die zunächst je an einem Schneidelement anliegen, durch eine Bewegung des Zweitstellelementes auf das Schneidelement zu vom Schneidelement gelöst und dadurch ein gemeinsames Anliegen von Erststellelement und Zweitstellelement am Schneidelement zuverlässig verhindert. Insbesondere wirkt dazu ein mit dem Zweitstellelement gekoppeltes Kuppelelement so auf das Erststellelement ein, dass es dem Rückstellelement entgegenwirkt. Mit einer Rückführung des Zweitstellelementes in dessen Lösestellung werden dabei bevorzugt auch die Erststellelemente wieder gelöst und liegen, insbesondere je nach Stellung einer damit zusammenwirkenden Schaltwelle, wieder an den ihnen zugeordneten Schneidelementen an.

Vorzugsweise sind das Kuppelelement zum Lösen des Erststellelementes vom Schneidelement und/oder von der Schaltwelle und das Zweitstellelement starr miteinander verbunden oder einteilig ausgebildet. Dadurch ist die Anzahl beweglicher Teile auf ein Minimum reduziert und legt sich das Zweitstellelement ggf. unmittelbar an das Erststellelement an.

In einer vorteilhaften Ausgestaltung der Erfindung hat die Schneidvorrichtung eine in unterschiedliche Schaltstellungen überführbare, drehbar um eine Schaltwellenachse gelagerte Schaltwelle. Außerdem hat die Schneidvorrichtung in der Ausgestaltung das zumindest in der Schneidstellung des Schneidelementes im Betrieb am Schneidelement anliegende und insbesondere schwenkbar gelagerte Erststellelement. Dabei hat das Erststellelement einen in einer der Schaltstellungen im Betrieb an der Schaltwelle anliegenden Schaltkontaktbereich.

Durch die Schaltwelle lässt sich insbesondere zwischen zwei Betriebsphasen einstellen, in welcher Stellung sich das Schneidelement im folgenden Betrieb befinden soll. In jeder seiner möglichen Schaltstellungen definiert die Schaltwelle, ob sich das Schneidelement im Betrieb in der Schneidstellung oder in der Ruhestellung befinden soll. Insbesondere ist die Schaltwelle so ausgebildet, dass das Erststellelement im Betrieb der Schneidvorrichtung entweder in der Schneidstellung oder in der Ruhestellung an der Schaltwelle anliegt. Dazu hat die Schaltwelle entlang ihres Umfangs insbesondere unterschiedliche Geometrien, durch welche letztlich die Stellung des Schneidelementes vordefiniert wird.

Indem das Erststellelement sowohl zum Anliegen am Schneidelement als auch zum Anliegen an der Schaltwelle ausgebildet ist, sind weitere Bauteile zur Kraftübertragung zwischen der Schaltwelle und dem Erststellelement nicht weiter notwendig.

Dadurch ist sowohl der Bauraum der Schneidvorrichtung minimiert als auch die Anzahl von zur Funktion derer notwendigen Bauteilen auf ein Minimum reduziert. Dadurch können Ausfallzeiten der Schneidvorrichtung deutlich reduziert werden.

Die Schaltwellenachse verläuft insbesondere quer zur Förderrichtung des Erntegutes im Förderkanal. Die Schaltwelle ist insbesondere zur Einstellung einer Mehrzahl von Erststellelementen und damit Schneidelementen ausgebildet. Bevorzugt hat die Schaltwelle einen in Richtung der Schaltwellenachse durchgehenden Schaltwellengrundkörper sowie eine Mehrzahl von in Richtung der Schaltwellenachse aneinander anschließende Schaltwellenaufsätze, die zumindest in der einen Schaltstellung zur Anlage an dem Schaltkontaktbereich des Erststellelementes ausgebildet sind.

Bevorzugt ist das Erststellelement schwenkbar um eine Stellschwenkachse gelagert. Besonders bevorzugt ist der Schaltkontaktbereich von einem ersten Schenkel des Erststellelementes umfasst. Der erste Schenkel erstreckt sich im Betrieb in der Schneidstellung des Schneidelementes von der Stellschwenkachse aus vom Schneidelement weg. Insbesondere besteht das Erststellelement aus zwei zueinander starren Schenkeln, die sich jeweils im Wesentlichen radial von der Stellschwenkachse weg erstrecken. Durch die Anordnung des Schaltkontaktbereichs am vom Schneidelement abgewandten Schenkel lässt sich die erste Stellvorrichtung trotz der Mehrfachfunktion des Erststellelementes einfach aufbauen und Bauteilkollisionen vermeiden. Insbesondere kann eine größere radiale Erstreckung des Erststellelementes von der Stellschwenkachse, welche mit der Anordnung des Schaltkontaktbereiches an dem dem Schneidelement zugewandten Schenkel notwendigerweise einherginge, vermieden werden.

Vorzugsweise weist der Schaltkontaktbereich eine Vertiefung auf, in die sich in der Schaltstellung im Betrieb ein Schaltelement der Schaltwelle erstreckt. Das Schaltelement ist insbesondere eine, bevorzugt von einem Schaltwellenaufsatz umfasste, Nocke, die sich von der Schaltwellenachse radial weg erstreckt. Alternativ hat bevorzugt das Erststellelement zumindest einen Zapfen, der sich in der Schaltstellung im Betrieb in eine Vertiefung der Schaltwelle erstreckt. Durch die Paarung aus Vertiefung und Schaltelement/Zapfen lässt sich in der Schaltstellung ein zuverlässiges Eingreifen von Schaltwelle und Erststellelement ineinander erreichen und so ein unbeabsichtigtes Verlassen der Schaltstellung vermeiden. Das Rückstellelement drückt im Betrieb in der Schaltstellung insbesondere das Erststellelement gegen die Schaltwelle, insbesondere gegen das Schaltelement.

In einer vorteilhaften Ausgestaltung der Erfindung hat die Schneidvorrichtung ein Kuppelelement, das zum Lösen des Erststellelementes von der Schaltwelle ausgebildet ist. Insbesondere liegt das Kuppelelement in einer Kuppelstellung an einem Kuppelkontaktbereich des Erststellelementes an. Das Kuppelelement sorgt dafür, dass zu einer Überführung der Schaltwelle in eine andere Schaltstellung kein Drehmoment überwunden werden muss, das aus einem Anliegen des Erststellelementes an der Schaltwelle resultierte. Stattdessen beabstandet das Kuppelelement das Erststellelement vom Schaltelement, bevor die Schaltwelle in eine andere Schaltstellung überführt wird. Dadurch kommt es zu geringeren Bauteilbelastungen und dadurch zu geringeren Ausfallzeiten.

Das Kuppelelement ist insbesondere schwenkbar gelagert. Mit seiner Überführung in die Kuppelstellung legt es sich bevorzugt an den Kuppelkontaktbereich des Erststellelementes an. Der Kuppelkontaktbereich ist besonders bevorzugt weiter von der Stellschwenkachse beabstandet als der Schaltkontaktbereich. Der Kuppelkontaktbereich ist vorzugsweise Teil des ersten Schenkels des Erststellelementes. Durch diesen Aufbau lässt sich ein Lösen des Erststellelementes von der Schaltwelle schon mit einer verhältnismäßig geringen Kraft zuverlässig erreichen und kann das Kuppelelement entsprechend klein bauen. Außerdem kann der Abstand zwischen dem Schneidelement und der Stellschwenkachse gering gehalten werden.

Bevorzugt wird das Erststellelement durch ein Überführen des Kuppelelementes in die Kuppelstellung sowohl von der Schaltwelle als auch vom Schneidelement gelöst. Insbesondere wirkt das Kuppelelement hinsichtlich der Schwenkrichtung des Erststellelementes dem Rückstellelement entgegen. Das Rückstellelement stellt insbesondere nach Rücküberführung des Kuppelelementes aus der Kuppelstellung ein Anliegen des Erststellelementes am Schneidelement und/oder an der Schaltwelle sicher.

Vorzugsweise ist das Kuppelelement insbesondere um die ortsfeste Stellschwenkachse schwenkbar gelagert. Durch die Art der Lagerung kann die Kuppelfunktion besonders zuverlässig realisiert werden. Dadurch, dass das Erststellelement und das Kuppelelement um die gleiche Achse schwenkbar angeordnet sind, baut die Schneidvorrichtung außerdem besonders kompakt und wird bei einer Überführung des Kuppelelementes in die Kuppelstellung eine Reibung zwischen Kuppel- und Erststellelement vermieden.

Bevorzugt ist am Kuppelelement ein das Kuppelelement aus der Kuppelstellung rückführendes Kuppelrückstellelement angeordnet. Das Kuppelrückstellelement ist insbesondere als Zugfeder ausgebildet. Besonders bevorzugt ist am Kuppelelement ein einfach wirkender Hydraulikzylinder angeordnet, durch den das Kuppelelement bevorzugt in die Kuppelstellung überführbar ist. Durch das Kuppelrückstellelement wird die Rückführung aus der Kuppelstellung auf mechanisch besonders einfache Weise zuverlässig realisiert. Außerdem erübrigt sich dadurch ein weiterer bzw. komplexer aufgebauter Hydraulikzylinder.

Vorzugsweise ist das Rückstellelement an einem zweiten Schenkel des Erststellelementes angeordnet. Der zweite Schenkel erstreckt sich in der Schneidstellung des Schneidelementes von der Stellschwenkachse zum Schneidelement. Das Rückstellelement ist insbesondere als Zugfeder ausgebildet. Ein Ende des Rückstellelementes ist bevorzugt ortsfest am Maschinenrahmen angeordnet. Insbesondere erstreckt sich das Rückstellelement zumindest in der Schneidstellung des Schneidelementes und in einer Seitenansicht bzw. in einem Längsschnitt der Schneidvorrichtung betrachtet zumindest teilweise hinter dem Schneidelement. Dadurch ist das Rückstellelement besonders platzsparend angeordnet und wirkt die Rückstellkraft zumindest im Wesentlichen in radialer Richtung auf das Erststellelement. Durch die Anordnung des Rückstellelementes am zweiten Schenkel wird die Rückstellkraft des Rückstellelementes in den Bereich in das Erststellelement eingeleitet, mit dem das Erststellelement auch an dem Schneidelement anliegt. Insofern kommt es zu einer besonders unmittelbaren Kraftübertragung auf das Schneidelement und der Belastung nur eines geringen Teils des Erststellelementes, was dessen Ausfallwahrscheinlichkeit reduziert.

In einer vorteilhaften Ausgestaltung der Erfindung ist die erste Stellvorrichtung derart ausgebildet, dass das Schneidelement im Betrieb und bei Anliegen des Schaltkontaktbereichs an der Schaltwelle in der Ruhestellung angeordnet ist. Dadurch liegt das Erststellelement im Betrieb entweder am Schneidelement oder an der Schaltwelle an. Dadurch werden extreme Bauteilbelastungen vermieden, die mit einem gleichzeitigen Anliegen sowohl am Schneidelement als auch an der Schaltwelle einhergingen.

Vorzugsweise hat die Schneidvorrichtung eine Antriebsvorrichtung zu einer kontinuierlichen Rotation der Schaltwelle um mehr als 360°. Insbesondere weist die Antriebsvorrichtung einen Hydraulikmotor, einen Elektromotor oder einen pneumatisch arbeitenden Motor auf. Durch die Antriebsvorrichtung ist eine ununterbrochene Rotation bei insbesondere konstanter Drehgeschwindigkeit ermöglicht, wobei dafür keine manuelle Kraft durch einen Bediener einzuleiten ist. Insbesondere ist die Antriebsvorrichtung zur kontinuierlichen, mehrfachen und ununterbrochenen Umdrehung der Schaltwelle ausgebildet. Ebenfalls ist es möglich, die Rotation schnell beginnend und dann langsamer werdend und umgekehrt durchzuführen. Durch die Antriebsvorrichtung kann durch die Schaltwelle neben ihrer Schaltfunktion eine Reinigungsfunktion erreicht werden. Durch Rotation der Schaltwelle, insbesondere mit seinen sich radial von der Schaltwellenachsen erstreckenden Schaltelementen, lassen sich Schneidgutablagerungen in der Umgebung der Schaltwelle aus der Schneidvorrichtung, insbesondere aus der sogenannten Messerlade der Schneidvorrichtung, ausfördern. Dadurch wird vermieden, dass sich Schneidgutablagerungen beispielsweise zwischen dem Erststellelement und dem Schaltelement oder zwischen dem Schneidelement und dem Erststellelement ablagern und dadurch das Zusammenwirken der genannten Komponenten beeinträchtigen.

Insbesondere umfasst die Antriebsvorrichtung einen Winkelsensor. Durch diesen lässt sich durch die Antriebsvorrichtung eine beliebige, vorgewählte Schaltstellung automatisch anfahren.

Bevorzugt hat die Schneidvorrichtung eine Sperrvorrichtung, die zur Sperrung der Antriebsvorrichtung bei Anliegen des Schaltkontaktbereiches an der Schaltwelle, insbesondere bei fehlender Anordnung des Kuppelelementes in der Kuppelstellung, ausgebildet ist. Die Sperrvorrichtung umfasst insbesondere einen Sensor zur Feststellung der Position des Erststellelementes bzw. des Kuppelelementes. Mit der Sperrung wird ein Antrieb der Schaltwelle vermieden und erst freigegeben, wenn die Schaltwelle ohne Kontakt zum Erststellelement rotieren kann. Dadurch wird eine unnötig hohe Belastung der genannten Bauteile durch Reibung aneinander wie auch insbesondere des Hydraulikmotors vermieden.

Besonders bevorzugt ist die Antriebsvorrichtung zur Bereitstellung einer Schaltwellenrotationsgeschwindigkeit von zumindest 0,2, bevorzugt von zumindest 0,4, besonders bevorzugt von zumindest 0,6 U/sek ausgebildet. Durch diese Rotationsgeschwindigkeiten der Schaltwelle wird ein Ausfördern von landwirtschaftlichen Schneidgutablagerungen wie Heu- oder Strohablagerungen besonders effektiv möglich und dadurch in diesem Aufgabengebiet eine optimale Schonung der Schneidvorrichtungsbauteile ermöglicht.

Vorzugsweise hat die Antriebsvorrichtung ein Getriebe zur Untersetzung einer von einer Schaltwellendrehzahl abweichenden Antriebsdrehzahl, insbesondere des Hydraulikmotors oder eines alternativen Elektromotors. Insbesondere umfasst das Getriebe eine Stirnradpaarung, durch die die Antriebsdrehzahl mit ihrer Übertragung auf die Schaltwelle zur Schaltwellendrehzahl reduziert wird. Durch das Getriebe lassen sich Antriebsmotoren mit einer ausreichenden Antriebsleistung verwenden, deren Bauraum aufgrund eines großen Drehzahl-Drehmoment-Verhältnisses gering ist.

Vorzugsweise ist eine radiale Erstreckung des Schaltelementes von der Schaltwellenachse mindestens 1,3-fach, insbesondere mindestens 1,5-fach so groß wie die radiale Erstreckung eines zumindest im Wesentlichen zylinderförmigen Abschnittes der Schaltwelle von der Schaltwellenachse. Insbesondere hat die Schaltwelle eine Mehrzahl von Schaltelementen, die in Richtung der Schaltwellenachse voneinander beabstandet sind und je einem Schneidelement zugeordnet sind. Zwischen zwei dieser Schaltwellenelemente befindet sich insbesondere der im Wesentlichen zylinderförmige Abschnitt der Schaltwelle. Durch den deutlich größeren Radius der Schaltelemente gegenüber diesem Abschnitt erreichen diese eine besonders große Förderfunktion und gewährleisten damit eine schnelle Reinigung der Schneidvorrichtung.

Besonders bevorzugt weist die Schaltwelle zwischen zwei in Richtung der Schaltwellenachse voneinander beabstandeten Schaltelementen zumindest ein insbesondere elastisches Förderelement auf. Zwischen den Schaltelementen ist das Förderelement insofern angeordnet, als dass es an einem axialen Schaltwellenabschnitt angeordnet ist, der zwischen den axialen Schaltwellenabschnitten mit den Schaltelementen angeordnet ist. Das Förderelement ist insbesondere als Bürste, starrer Mitnehmer oder ähnlicher Aufsatz ausgebildet. Die radiale Erstreckung des Förderelementes von der Schaltwellenachse ist insbesondere größer als die radiale Erstreckung der Schaltelemente von der Schaltwellenachse. Durch diesen großen Radius wird die Förderfunktion weiter erhöht und lassen sich insbesondere auch die Schneidgutablagerungen ausfördern, welche zwischen zwei Erststellelementen bzw. zwischen zwei Schneidelementen angeordnet sind.

In einer vorteilhaften Ausgestaltung der Erfindung hat die Schneidvorrichtung zumindest ein mit der Schaltwelle gekoppeltes und in Abhängigkeit von dessen Rotation rotierendes Reinigungselement, dessen Reinigungsrotationsachse insbesondere parallel zur Schaltwellenachse angeordnet ist. Das Reinigungselement ist insbesondere über eine Stirnradpaarung mit der Schaltwelle gekoppelt und wird bevorzugt ebenso durch die Antriebsvorrichtung angetrieben. Durch das gesonderte Reinigungselement lassen sich auch weiter von der Schaltwelle beabstandete Bereiche der Schneidvorrichtung automatisch reinigen.

Die Aufgabe wird ebenso gelöst durch eine landwirtschaftliche Maschine mit einer Schneidvorrichtung nach einem der vorhergehenden Ansprüche. Bevorzugt handelt es sich bei der landwirtschaftlichen Maschine um eine Ballenpresse oder einen Ladewagen, durch welche im Betrieb insbesondere Heu oder Stroh unmittelbar vom Erdboden aufgenommen und geschnitten werden können.

Weitere Einzelheiten und Vorteile der Erfindung sind den nachfolgend beschriebenen, schematischen dargestellten Ausführungsbeispielen zu entnehmen; es zeigen:
- Fig. 1: einen Längsschnitt durch eine erfindungsgemäße Schneidvorrichtung mit einem Schneidelement in einer Schneidstellung,
- Fig. 2: einen Längsschnitt durch die Schneidvorrichtung gemäß Fig. 1 mit dem Schneidelement in einer Reinigungsstellung,
- Fig. 3: einen Längsschnitt durch die Schneidvorrichtung gemäß Fig. 1 mit dem Schneidelement in einer Ruhestellung,
- Fig. 4: eine Übersichtsdarstellung eines Teils der Schneidvorrichtung gemäß Fig. 1,
- Fig. 5: eine Übersichtsdarstellung des Teils gemäß Fig. 4 aus einer gegenüberliegenden Perspektive,
- Fig. 6: eine Übersichtsdarstellung einer Schaltwelle einer erfindungsgemäßen Schneidvorrichtung,
- Fig. 7: einen schematischen Längsschnitt einer erfindungsgemäßen Ballenpresse mit der Schneidvorrichtung gemäß Fig. 1.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

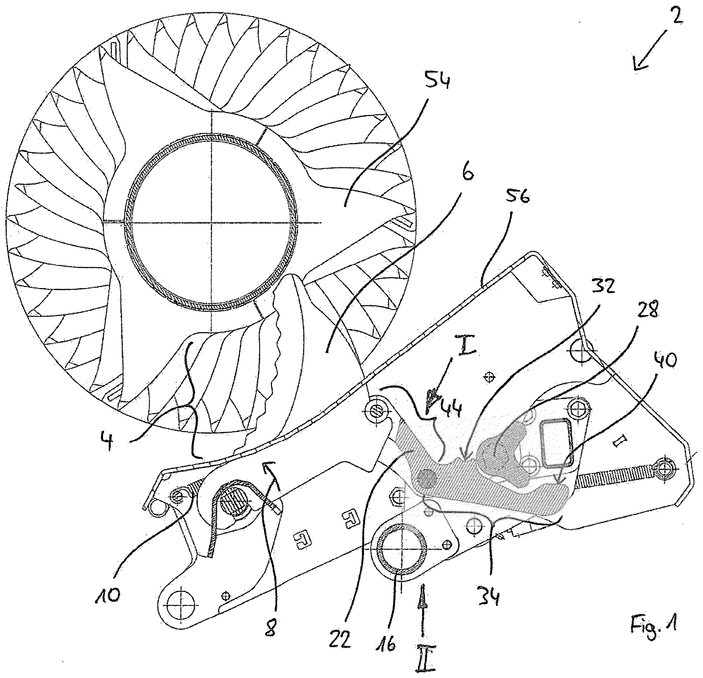

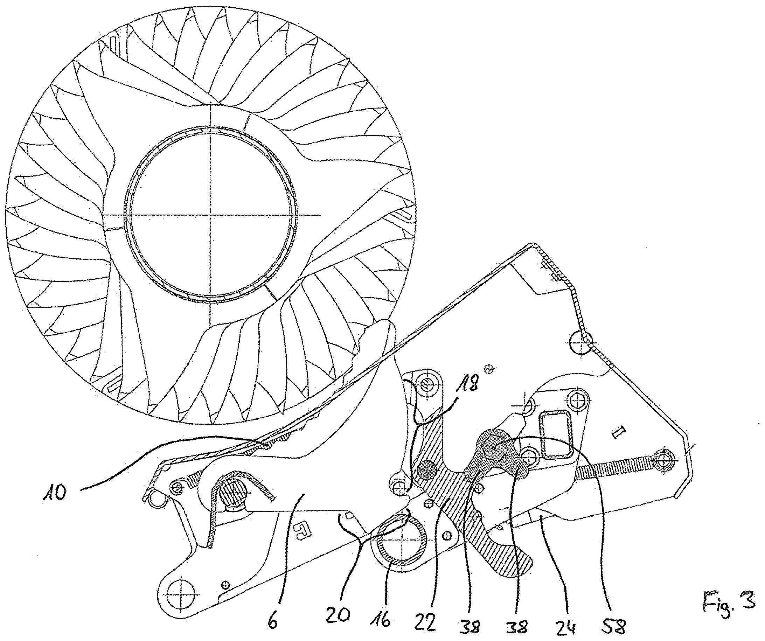

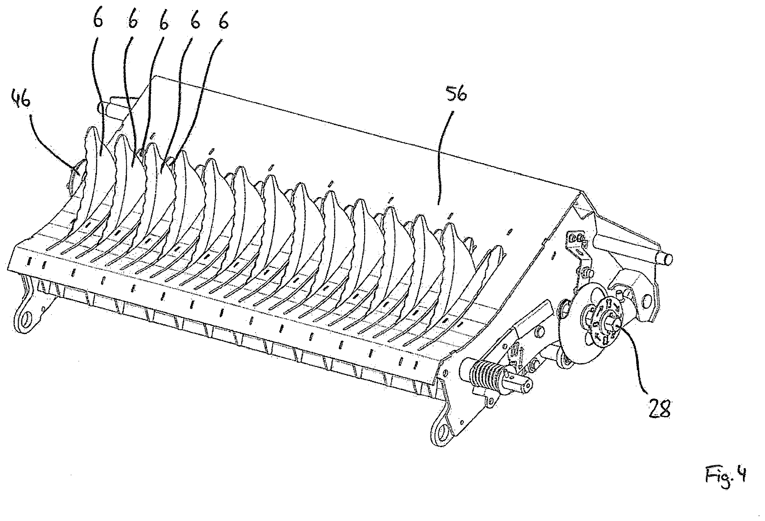

Die Fig. 1 bis 3 zeigen eine erfindungsgemäße Schneidvorrichtung 2 in einem Längsschnitt. Die Schneidvorrichtung 2 bildet einen Förderkanal 4, durch den im Betrieb insbesondere landwirtschaftliches Schneidgut gefördert und dabei insbesondere geschnitten wird. Der Förderkanal 4 wird begrenzt durch einen Förder- und Schneidrotor 54 einerseits und eine Förderkanalwandung 56 andererseits. Die Schneidvorrichtung 2 hat eine Mehrzahl von schwenkbar gelagerten Schneidelementen 6 (vergl. auch Fig. 4), wovon in den Fig. 1 bis 3 jeweils eines dargestellt ist. Das Schneidelement 6 ist durch eine Bewegung in eine erste Schwenkrichtung 8 aus einer Ruhestellung (vergl. Fig. 3) in eine Schneidstellung (vergl. Fig. 1) überführbar. In der Schneidstellung ist das Schneidelement 6 zum Schneiden des Schneidgutes mit einer Schneide im Förderkanal 4 positioniert.

Die Schneidvorrichtung 2 hat eine erste Stellvorrichtung (I) zum Rückführen des Schneidelementes 6 in die Schneidstellung und zum Halten des Schneidelementes 6 in der Schneidstellung. Die erste Stellvorrichtung (I) umfasst ein Erststellelement 22 und ein Rückstellelement 10. Das Erststellelement 22 ist schwenkbar um eine Stellschwenkachse 36 gelagert. Das Rückstellelement 10 ist einenends ortsfest an einem Maschinenrahmen und anderenends an einem zweiten Schenkel 44 des Erststellelementes 22 angeordnet.

In der Schneidstellung des Schneidelementes 6 liegt das Erststellelement 22 mit einer Rolle an einem ersten Oberflächenabschnitt 18 des Schneidelementes 6 an. Durch eine Zugkraft des Rückstellelementes 10 wird das Erststellelement 22 in eine Vertiefung des Schneidelementes 6 gezogen, wodurch das Schneidelement 6 im Betrieb möglichst in der Schneidstellung verbleibt.

Zur Überführung des Schneidelementes 6 aus der Ruhestellung in die Schneidstellung wird das Erststellelement 22 aus seiner in Fig. 3 dargestellten Position an den ersten Oberflächenabschnitt 18 angelegt. Dadurch wird ein erstes Drehmoment in die Schwenkrichtung 8 auf das Schneidelement 6 aufgebracht. Dadurch ist das Schneidelement regelmäßig aus der Ruhestellung zu lösen und gleitet aufwärts und an dem Erststellelement 22 entlang. Aufgrund des dabei stattfindenden Annäherns des zweiten Schenkels 44 des Erststellelementes 22 an die Schwenkachse des Schneidelementes 6 und die damit einhergehende Verkürzung des Rückstellelementes 10 sinkt das auf das Schneidelement 6 aufgebrachte Drehmoment mit dem Hinaufschwenken des Schneidelementes 6, ausgehend vom ersten Drehmoment, ab.

Bei Auftreten eines Fremdkörpers, insbesondere eines Steins im Betrieb der Schneidvorrichtung 2 innerhalb des Förderkanals 4 ermöglicht die erste Stellvorrichtung (I) ein Zurückschwenken des Schneidelementes 6 aus der Schneidstellung entgegen der Zugkraft des Rückstellelementes 10. Nach Passieren des Fremdkörpers bewirkt das Rückstellelement 10 ein Rückstellen des Schneidelementes 6 in die Schneidstellung.

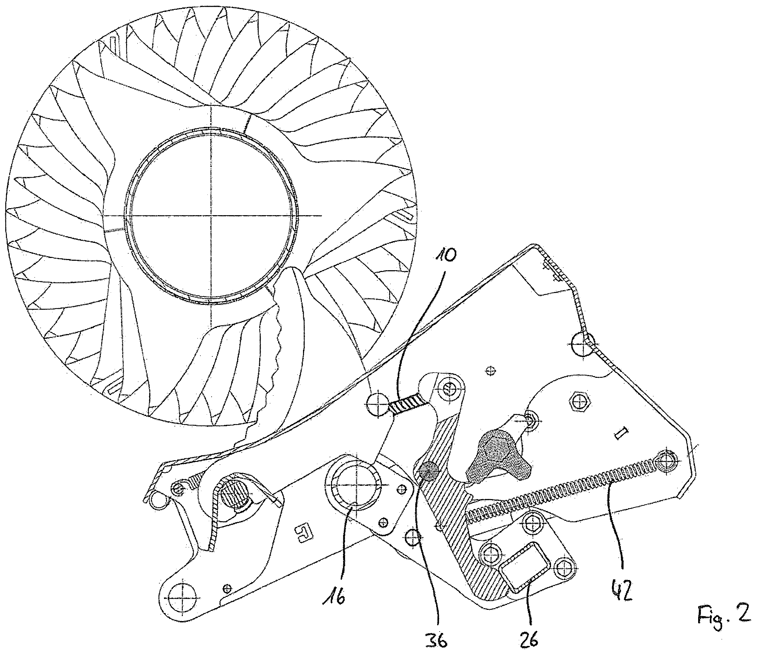

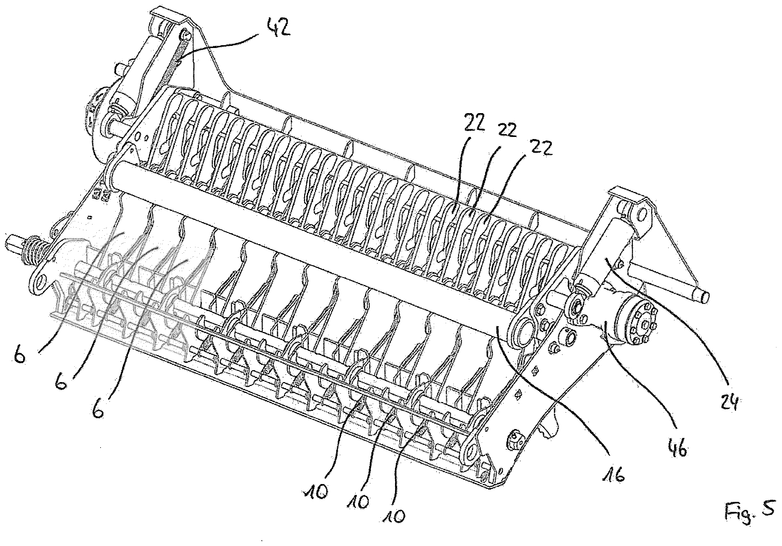

Zu einer Überführung des Schneidelementes 6 aus der Schneidstellung in die Ruhestellung dient ein Kuppelelement 26 sowie die Schaltwelle 28. Das Kuppelelement 26 ist wie das Erststellelement 22 schwenkbar um die Stellschwenkachse 36 gelagert. Zur Ermöglichung eines schwerkraftbedingten Rückschwenkens des Schneidelementes 6 in die Ruhestellung lässt sich das Kuppelelement 26 zunächst gegen einen Kuppelkontaktbereich 40 des Erststellelementes 22 verschwenken (vergl. Fig. 2). Diese Verschwenkung ist insbesondere mit einem mit dem Kuppelelement gekoppelten Hydraulikzylinder 24 (vergl. Fig. 5) herbeizuführen. Der Kuppelkontaktbereich 40 ist dabei an einem ersten Schenkel 34 des Erststellelementes 22 angeordnet.

Nach einer Überführung des Kuppelelementes 26 in die in Fig. 2 dargestellte Kuppelstellung ist das Erststellelement 22 sowohl von dem Schneidelement 6 als auch von der Schaltwelle 28 beabstandet. Die Schaltwelle 28 ist um eine Schaltwellenachse 58 drehbar gelagert und umfasst entlang ihres Umfangs mehrere Schaltelemente 38. Die Schaltwelle 28 ist in Fig. 1 einer ersten Schaltstellung zur Positionierung des Schneidelementes 6 in der Schneidstellung angeordnet. Nach Beabstandung des Erststellelementes 22 von der Schaltwelle 28 ist die Schaltwelle 28 durch Verschwenkungen um < 360° in weitere Schaltstellungen wie z.B. in Fig. 2 überführbar. In den weiteren Schaltstellungen ist dem Schaltkontaktbereich 32 entgegen den ersten Schaltstellungen ein Schaltelement 38 zur Positionierung des Schneidelementes 6 in der Ruhestellung zugewandt.

Nach einer Überführung der Schaltwelle 28 in eine weitere Schaltstellung lässt sich das Kuppelelement 26 aus der Kuppelstellung (vergl. Fig. 2) in eine Lösestellung (vergl. Fig. 3) von einem Kuppelrückstellelement 42 rücküberführen. Bedingt durch das Rückstellelement 10 folgt das Erststellelement 22 der Bewegung des Kuppelelementes 26 dabei so weit, bis das Erststellelement 22 mit einem Schaltkontaktbereich an einem der Schaltelemente 38 der Schaltwelle 28 anliegt. Der Schaltkontaktbereich 32 ist dabei am ersten Schenkel 34 des Erststellelementes 22 angeordnet. Der Schaltkontaktbereich 32 weist eine Vertiefung auf, in die sich das eine Schaltelement 38 in der weiteren Schaltstellung und nach Lösen des Kuppelelementes 26 teilweise erstreckt (vergl. Fig. 3). Dadurch wird ein Kontakt zwischen dem Schneidelement 6 und dem Erststellelement 22 vermieden, wodurch das Schneidelement 6 in der Ruhestellung verbleibt. Eine Überführung der Schaltwelle 28 von der weiteren Schaltstellung in eine erste Schaltstellung lässt sich analog herbeiführen.

Starr mit dem Kuppelelement 26 verbunden ist ein Zweitstellelement 16 der Schneidvorrichtung 2. Das Zweitstellelement 16 ist damit ebenso wie das Kuppelelement 26 um die Stellschwenkachse 36 verschwenkbar. Dabei ist das Zweitstellelement 16 mit einem zweiten Oberflächenabschnitt 20 des Schneidelementes 6 in Kontakt zu bringen.

Das Zweitstellelement 16 ist Teil einer zweiten Stellvorrichtung (II) zum Verschwenken des Schneidelementes 6 aus der Ruhestellung in die erste Schwenkrichtung 8. Die zweite Stellvorrichtung (II) ist zum Aufbringen eines zweiten Drehmomentes auf das Schneidelement 6 in der Ruhestellung ausgebildet, wobei das zweite Drehmoment größer ist als das von der ersten Stellvorrichtung (I) auf das Schneidelement 6 aufzubringende erste Drehmoment in der Ruhestellung. Das zweite Drehmoment ist so groß, dass das Schneidelement 6 auch bei Vorhandensein von Schneidgutablagerungen zwischen dem Schneidelement 6 und der Förderkanalwandung 56 zuverlässig aus der Ruhestellung in die erste Schwenkrichtung 8 verschwenkt werden kann, wenn ein solches Verschwenken durch das kleinere erste Drehmoment nicht mehr zu verwirklichen ist.

Das Zweitstellelement 16 erstreckt sich unterhalb einer Mehrzahl von Schneidelementen 6 (vergl. Fig. 5). Jedem Schneidelement 6 ist dabei eine erste Stellvorrichtung (I) mit je einem Erststellelement 22 zugeordnet. Das Kuppelelement 26 hat ebenso wie das Zweitstellelement 16 eine Breite, die im Wesentlichen einer Breite des Förderkanals 4 entspricht, wodurch durch das Kuppelelement 26 sämtliche Erststellelemente 22 sowohl von dem jeweiligen Schneidelement 6 als auch von der Schaltwelle 28 gelöst werden können.

Die Schneidvorrichtung 2 hat eine einen Hydraulikmotor 46 aufweisende Antriebsvorrichtung zu einer kontinuierlichen Rotation der Schaltwelle 28 um mehr als 360° (vergl. Fig. 4 und 5). Außerdem hat die Schneidvorrichtung 2 eine nicht dargestellte Sperrvorrichtung zur Sperrung der Antriebsvorrichtung bei Anliegen des Schaltkontaktbereichs 32 an der Schaltwelle 28, insbesondere bei fehlender Anordnung des Kuppelelementes 26 in der Kuppelstellung.

Der Hydraulikmotor 46 ist über ein nicht gezeigtes Getriebe zur Untersetzung seiner Antriebsdrehzahl mit der Schaltwelle 28 gekoppelt. Durch einen Winkelsensor ist die Antriebsvorrichtung zur automatischen Einstellung unterschiedlicher Schaltstellungen der Schaltwelle 28 ausgebildet.

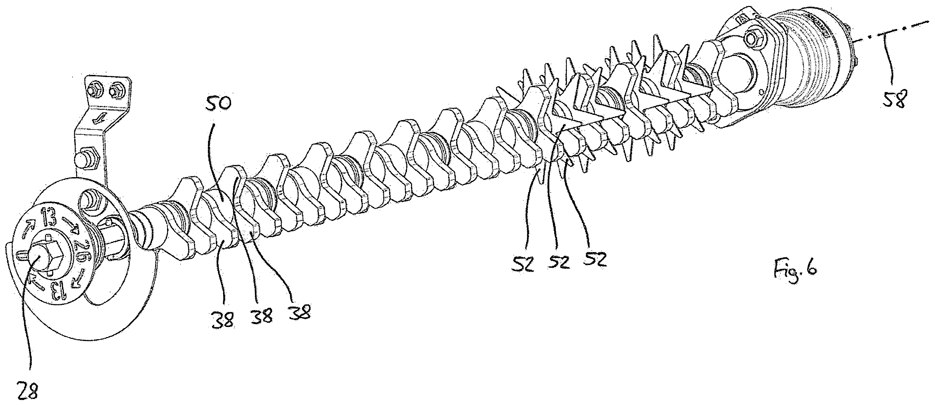

Die Schaltelemente 38 der Schaltwelle 28 haben eine radiale Erstreckung von der Schaltwellenachse 58, die mehr als 1,3-fach so groß ist wie die radiale Erstreckung eines zylinderförmigen Abschnittes 50 der Schaltwelle 28 von der Schaltwellenachse 58 (vergl. Fig. 6). Zwischen zwei in Richtung der Schaltwellenachse 58 benachbarten Schaltelementen 38 weist die Schaltwelle 28 insbesondere ein Förderelement 52 auf. Fig. 6 zeigt exemplarische Förderelemente 52 nur auf einem Abschnitt der Schaltwelle 28. Bevorzugt sind derartige Förderelemente 52 entlang der gesamten Schaltwellenlänge an der Schaltwelle 28 angeordnet.

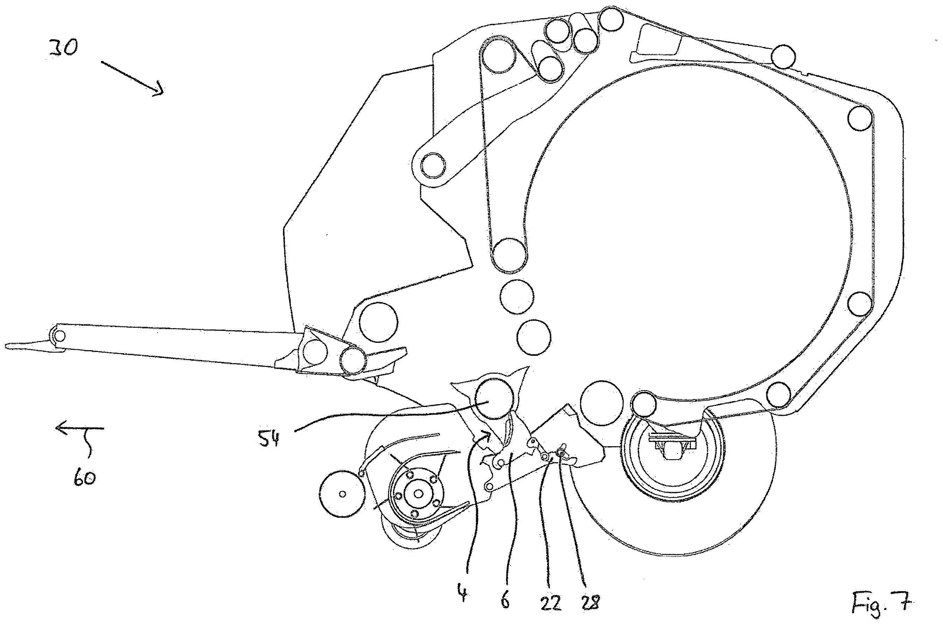

Fig. 7 zeigt eine Ballenpresse 30 mit einer erfindungsgemäßen Schneidvorrichtung 2. Im Betrieb wird die Ballenpresse 30 in eine Fahrtrichtung 60 fortbewegt und dabei landwirtschaftliches Schneidgut wie Heu oder Stroh vom Erdboden aufgenommen und unter anderem vom Förder- und Schneidrotor 54 durch den Förderkanal 4 gefördert. Dabei wird es unter anderem von dem in Schneidstellung dargestellten Schneidelement geschnitten und anschließend einer Ballenkammer zur Ausbildung eines Rundballens zugeführt.

## Patentansprüche

1. Schneidvorrichtung (2) zum Fördern und Schneiden insbesondere landwirtschaftlichen Schneidgutes, mit einem Förderkanal (4) und zumindest einem schwenkbar gelagerten Schneidelement (6), welches durch eine Bewegung in eine erste Schwenkrichtung (8) aus einer Ruhestellung in eine Schneidstellung überführbar ist, in der das Schneidelement (6) zum Schneiden des Schneidgutes zumindest teilweise innerhalb des Förderkanals (4) positioniert ist, und mit einer ein Rückstellelement (10) aufweisenden und zum Aufbringen eines ersten Drehmomentes auf das Schneidelement (6) in der Ruhestellung ausgebildeten ersten Stellvorrichtung (I) zum Rückführen des Schneidelementes (6) in die Schneidstellung und zum Halten des Schneidelementes (6) in der Schneidstellung,
**gekennzeichnet durch** eine zweite Stellvorrichtung (II) zum Verschwenken des Schneidelementes (6) aus der Ruhestellung in die erste Schwenkrichtung (8), wobei die zweite Stellvorrichtung (II) derart zum Aufbringen eines zweiten Drehmomentes auf das Schneidelement (6) ausgebildet ist, dass das zweite Drehmoment größer als das von der ersten Stellvorrichtung (I) aufgebrachte erste Drehmoment in der Ruhestellung ist.

2. Schneidvorrichtung (2) nach Anspruch 1, **dadurch gekennzeichnet, dass** die zweite Stellvorrichtung (II) ein schwenkbewegliches Zweitstellelement (16) umfasst, das zumindest beim Aufbringen des zweiten Drehmomentes am Schneidelement (6) anliegt.

3. Schneidvorrichtung (2) nach Anspruch 2, **dadurch gekennzeichnet, dass** das Schneidelement (6) einen ersten Oberflächenabschnitt (18) zum Anliegen an einem Erststellelement (22) der ersten Stellvorrichtung (I) und einen zweiten Oberflächenabschnitt (20) zum Anliegen am Zweitstellelement (16) der zweiten Stellvorrichtung (II) hat.

4. Schneidvorrichtung (2) nach Anspruch 2 oder 3, **dadurch gekennzeichnet, dass** die zweite Stellvorrichtung (II) zumindest einen mit dem Zweitstellelement (16) gekoppelten Hydraulikzylinder (24) zur Erzeugung des zweiten Drehmomentes aufweist.

5. Schneidvorrichtung (2) nach einem der Ansprüche 2 bis 4, **dadurch gekennzeichnet, dass** das Zweitstellelement (16) zur Aufbringung von zweiten Drehmomenten auf mehrere Schneidelemente (6) ausgebildet ist und eine Erstreckung in eine Querrichtung hat, die größer ist als der Abstand von zwei benachbarten Schneidelementen (6).

6. Schneidvorrichtung (2) nach einem der Ansprüche 3 bis 5, **dadurch gekennzeichnet, dass** das Erststellelement (22) und das Zweitstellelement (16) derart gekoppelt sind, dass bei einer Bewegung des Zweitstellelementes (16) zum Schneidelement (6) das Erststellelement (22) durch ein Kuppelelement (26) vom Schneidelement (6) und/oder von einer Schaltwelle (28) gelöst wird.

7. Schneidvorrichtung (2) nach Anspruch 6, **dadurch gekennzeichnet, dass** das Kuppelelement (26) das Zweitstellelement (16) starr miteinander verbunden oder einteilig ausgebildet sind.

8. Schneidvorrichtung (2) nach einem der vorhergehenden Ansprüche, **gekennzeichnet durch** eine in unterschiedliche Schaltstellungen überführbare, drehbar um eine Schaltwellenachse (58) gelagerte Schaltwelle (28) und ein zumindest in der Schneidstellung des Schneidelementes (6) im Betrieb am Schneidelement (6) anliegendes und schwenkbar gelagertes Erststellelement (22), das einen in einer der Schaltstellungen im Betrieb an der Schaltwelle (28) anliegenden Schaltkontaktbereich (32) aufweist.

9. Schneidvorrichtung (2) nach Anspruch 8, **dadurch gekennzeichnet, dass** der Schaltkontaktbereich (32) von einem ersten Schenkel (34) des Erststellelementes (22) umfasst ist, der sich im Betrieb in der Schneidstellung des Schneidelementes (6) von der Stellschwenkachse (36) aus vom Schneidelement (6) wegerstreckt.

10. Schneidvorrichtung (2) nach Anspruch 8 oder 9, **dadurch gekennzeichnet, dass** der Schaltkontaktbereich (32) eine Vertiefung aufweist, in die sich in der Schaltstellung im Betrieb ein Schaltelement (38) der Schaltwelle (28) erstreckt.

11. Schneidvorrichtung (2) nach Anspruch 6, **dadurch gekennzeichnet, dass** das Kuppelelement (26) in einer Kuppelstellung an einem Kuppelkontaktbereich (40) des Erststellelementes (22) anliegt.

12. Schneidvorrichtung (2) nach Anspruch 11, **dadurch gekennzeichnet, dass** der Kuppelkontaktbereich (40) weiter von der Stellschwenkachse (36) beabstandet ist als der Schaltkontaktbereich (32) und/oder am ersten Schenkel (34) des Erststellelementes (22) angeordnet ist.

13. Schneidvorrichtung (2) nach Anspruch 11 oder 12, **dadurch gekennzeichnet, dass** das Kuppelelement (26) um die ortsfeste Stellschwenkachse (36) schwenkbar gelagert sind.

14. Schneidvorrichtung (2) nach einem der Ansprüche 11 bis 13, **dadurch gekennzeichnet, dass** am Kuppelelement (26) ein das Kuppelelement (26) aus der Kuppelstellung rückführendes Kuppelrückstellelement (42) angeordnet ist.

15. Landwirtschaftliche Maschine, insbesondere Ballenpresse (30) oder Ladewagen, mit einer Schneidvorrichtung (2) nach einem der vorhergehenden Ansprüche.

## Claims

1. Cutting device (2) for conveying and cutting in particular agricultural material to be cut, comprising a conveying channel (4) and at least one pivotably mounted cutting element (6) which can be transferred from a rest position to a cutting position by moving in a first pivoting direction (8), in which cutting position the cutting element (6) for cutting the material to be cut is at least in part positioned within the conveying channel (4), and comprising a first adjusting device (I) for returning the cutting element (6) to the cutting position and for holding the cutting element (6) in the cutting position, which device has a return element (10) and is designed to apply a first torque to the cutting element (6) in the rest position,
**characterised by** a second adjusting device (II) for pivoting the cutting element (6) out of the rest position in the first pivoting direction (8), the second adjusting device (II) being designed to apply a second torque to the cutting element (6), such that the second torque is greater than the first torque applied by the first adjusting device (I) in the rest position.

2. Cutting device (2) according to claim 1, **characterised in that** the second adjusting device (II) comprises a pivotable second adjusting element (16) which rests on the cutting element (6) at least when the second torque is applied.

3. Cutting device (2) according to claim 2, **characterised in that** the cutting element (6) has a first surface portion (18) for resting on a first adjusting element (22) of the first adjusting device (I) and a second surface portion (20) for resting on the second adjusting element (16) of the second adjusting device (II).

4. Cutting device (2) according to either claim 2 or claim 3, **characterised in that** the second adjusting device (II) has at least one hydraulic cylinder (24) coupled to the second adjusting element (16) for generating the second torque.

5. Cutting device (2) according to any of claims 2 to 4, **characterised in that** the second adjusting element (16) is designed to apply second torques to a plurality of cutting elements (6) and has an extension in a transverse direction which is greater than the distance between two adjacent cutting elements (6).

6. Cutting device (2) according to any of claims 3 to 5, **characterised in that** the first adjusting element (22) and the second adjusting element (16) are coupled in such a way that when the second adjusting element (16) moves towards the cutting element (6), the first adjusting element (22) is released from the cutting element (6) and/or from a switching shaft (28) by means of a coupling element (26).

7. Cutting device (2) according to claim 6, **characterised in that** the coupling element (26) the second adjusting element (16) are rigidly connected to one another or are designed in one piece.

8. Cutting device (2) according to any of the preceding claims, **characterised by** a switching shaft (28) which can be transferred to different switching positions and which is mounted so as to be rotatable about a switching shaft axis (58), and a pivotably mounted first adjusting element (22) which at least in the cutting position of the cutting element (6) rests on the cutting element (6) during operation and which has a switching contact region (32) resting on the switching shaft (28) in one of the switching positions during operation.

9. Cutting device (2) according to claim 8, **characterised in that** the switching contact region (32) is comprised of a first leg (34) of the first adjusting element (22) which extends away from the adjusting pivot shaft (36) of the cutting element (6) in the cutting position of the cutting element (6) during operation.

10. Cutting device (2) according to either claim 8 or claim 9, **characterised in that** the switching contact region (32) has a recess into which a switching element (38) of the switching shaft (28) extends in the switching position during operation.

11. Cutting device (2) according to claim 6, **characterised in that** the coupling element (26) rests on a coupling contact region (40) of the first adjusting element (22) in a coupling position.

12. Cutting device (2) according to claim 11, **characterised in that** the coupling contact region (40) is spaced further apart from the adjusting pivot shaft (36) than the switching contact region (32) and/or is arranged on the first leg (34) of the first adjusting element (22).

13. Cutting device (2) according to either claim 11 or claim 12, **characterised in that** the coupling element (26) is mounted so as to be pivotable about the stationary adjusting pivot shaft (36).

14. Cutting device (2) according to any of claims 11 to 13, **characterised in that** a coupling return element (42) which returns the coupling element (26) from the coupling position is arranged on the coupling element (26).

15. Agricultural machine, in particular a baler (30) or a forage wagon, comprising a cutting device (2) according to any of the preceding claims.

## Revendications

1. Dispositif de coupe (2) pour transférer et couper notamment un produit agricole de coupe comprenant un canal de transfert (4) et au moins un élément de coupe (6) monté pivotant et qui, par un mouvement dans une première direction de pivotement (8) passe de sa position de repos à une position de coupe dans laquelle l'élément de coupe (6) vient au moins en partie à l'intérieur du canal de transfert (4) pour couper le produit, et
un premier dispositif de positionnement (I) comportant un élément de rappel (10) et prévu pour appliquer un premier couple sur l'élément de coupe (6) en position de repos, pour rappeler l'élément de coupe (6) en position de coupe et tenir l'élément de coupe (6) dans cette position de coupe,
dispositif **caractérisé par**
un second dispositif de positionnement (II) pour pivoter l'élément de coupe (6) à partir de sa position de repos dans la première direction de pivotement (8), le second dispositif de positionnement (II) étant réalisé pour appliquer un second couple à l'élément de coupe (6), le second couple étant supérieur au premier couple appliqué au premier dispositif de positionnement (I) dans sa position de repos.

2. Dispositif de coupe (2) selon la revendication 1,
**caractérisé en ce que**
le second dispositif de positionnement (II) comprend un élément de seconde position (16) mobile en pivotement et qui s'applique contre l'élément de coupe (6) au moins lorsque le premier couple est appliqué.

3. Dispositif de coupe (2) selon la revendication 2,
**caractérisé en ce que**
l'élément de coupe (6) a un premier segment de surface (18) pour s'appliquer contre un élément de première position (22) du premier dispositif de positionnement (I) et un second segment de surface (20) pour s'appliquer contre l'élément de seconde position (16) du second dispositif de positionnement (II).

4. Dispositif de coupe (2) selon la revendication 2 ou 3,
**caractérisé en ce que**
le second dispositif de positionnement (II) comporte au moins un vérin hydraulique (24) couplé à l'élément de seconde position (16) pour générer le second couple.

5. Dispositif de coupe (2) selon l'une des revendications 2 à 4,
**caractérisé en ce que**
l'élément de seconde position (16) est réalisé pour appliquer deux couples sur plusieurs éléments de coupe (6) et il a une extension dans la direction transversale, plus grand que l'intervalle entre deux éléments de coupe voisins (6).

6. Dispositif de coupe (2) selon l'une des revendications 3 à 5,
**caractérisé en ce que**
l'élément de première position (22) et l'élément de seconde position (16) sont couplés l'un à l'autre pour qu'en cas de mouvement de l'élément de seconde position (16) vers l'élément de coupe (6), l'élément de première position (22) est détaché par un élément de couplage (26) par rapport à l'élément de coupe (6) et/ou d'un arbre de commutation (28).

7. Dispositif de coupe (2) selon la revendication 6,
**caractérisé en ce que**
l'élément de couplage (26) est relié rigidement à l'élément de seconde position (16) ou est réalisé en une seule pièce.

8. Dispositif de coupe (2) selon l'une des revendications précédentes,
**caractérisé par**
un arbre de commutation (28) tournant autour d'un axe d'arbre de commutation (58) qui peut être transféré dans différentes positions de commutation, et
un élément de première position (22) monté pivotant et s'appliquant contre l'élément de coupe (6) lorsqu'en fonctionnement, l'élément de coupe (6) est en position de coupe, cet élément (22) ayant dans l'une des positions de commutation, une plage de contact de commutation (32) s'appliquant en fonctionnement contre l'arbre de commutation (28).

9. Dispositif de coupe (2) selon la revendication 8,
**caractérisé en ce que**
la plage de contact de commutation (32) fait partie d'une première branche (34) de l'élément de première position (22) et qui, en fonctionnement en position de coupe de l'élément de coupe (6), s'écarte de l'élément de coupe (6) par rapport à l'axe de pivotement (36).

10. Dispositif de coupe (2) selon la revendication 8 ou 9,
**caractérisé en ce que**
la plage de contact de commutation (32) présente une partie en creux dans laquelle s'étend un élément de commutation (38) de l'arbre de commutation (28) lorsque celui-ci est en position de commutation en fonctionnement.

11. Dispositif de coupe (2) selon la revendication 6,
**caractérisé en ce que**
en position de couplage l'élément de couplage (26) s'applique contre une zone de contact de couplage (40) de l'élément de première position (22).

12. Dispositif de coupe (2) selon la revendication 11,
**caractérisé en ce que**
la plage de contact de couplage (40) est plus éloignée de l'axe de pivotement de réglage (36) que la plage de contact de commutation (32) et/ou est prévue sur la première branche (34) de l'élément de première position (22).

13. Dispositif de coupe (2) selon la revendication 11 ou 12,
**caractérisé en ce que**
l'élément de couplage (26) est monté pivotant autour de l'axe de pivotement fixe (36).

14. Dispositif de coupe (2) selon l'une des revendications 11 à 13,
**caractérisé en ce que**
l'élément de couplage (26) comprend un élément de rappel de couplage (42) qui le rappelle à partir de sa position de couplage.

15. Machine agricole, notamment presse à balles (30) ou chariot de transport, comportant un dispositif de coupe (2) selon l'une des revendications précédentes.
